# EUROPÄISCHE PATENTSCHRIFT

(11) **EP 3 445 532 B1**
(45) Veröffentlichungstag und Bekanntmachung des Hinweises auf die Patenterteilung: **07.06.2023**
(21) Anmeldenummer: 17714644.6
(22) Anmeldetag: 28.03.2017
(51) Int. Cl.: B25J 5/00, B25J 9/16, B25J 19/04, B25J 13/08

(54) **VERFAHREN ZUM BETREIBEN EINER FERTIGUNGSANLAGE**
METHOD FOR OPERATING A PRODUCTION PLANT
PROCÉDÉ POUR FAIRE FONCTIONNER UNE INSTALLATION DE FABRICATION

(30) Priorität: 22.04.2016 DE 102016004975
(43) Veröffentlichungstag der Anmeldung: 27.02.2019
(60) Teilanmeldung: 22000208.3
(73) Patentinhaber: SEW-EURODRIVE GmbH & Co. KG, 76646 Bruchsal (DE)
(72) Erfinder: SODER, Johann, 76707 Hambrücken (DE)
(86) Internationale Anmeldenummer: PCT/EP2017/025065
(87) Internationale Veröffentlichungsnummer: WO 2017/182133

(56) Entgegenhaltungen:
- DE-A1-102014 217 352
- US-B1- 6 430 473
- Martin Hägele ET AL: "Robot Assistants at Manual Workplaces: Effective Co-operation and Safety Aspects", Proceedings of the 33rd ISR (International Symposium on Robotics, 11. Oktober 2002 (2002-10-11), XP055384475, Gefunden im Internet: URL:https://pdfs.semanticscholar.org/57d1/ 758d9b6f2e08cd44d10335da992e9089786e.pdf [gefunden am 2017-06-23]
- F Lange ET AL: "Montage am kontinuierlich bewegten Band", VDI-Bericht 2012, 22. Oktober 2008 (2008-10-22), XP055384037, München Gefunden im Internet: URL:http://elib.dlr.de/55730/1/montage_rob otik08_langfassung.pdf [gefunden am 2017-06-22]
- NTDTV: "Move Over, Rover - Here Comes Justin the Robot", youtube, 6. Juni 2011 (2011-06-06), Seite 1 pp., XP054977479, Gefunden im Internet: URL:https://www.youtube.com/watch?v=kBAqsT pcHEE [gefunden am 2017-06-26]
- SCHRAFT R D ET AL: "PowerMate - A Safe and Intuitive Robot Assistant for Handling and Assembly Tasks", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18. April 2005 (2005-04-18), Seiten 4074-4079, XP010871382, DOI: 10.1109/ROBOT.2005.1570745 ISBN: 978-0-7803-8914-4

## Beschreibung

Die Erfindung betrifft ein Verfahren zum Betreiben einer Fertigungsanlage.

Es ist allgemein bekannt, dass bei einer Fertigungsanlage zur Herstellung eines Produktes Komponenten zu verbinden sind.

**Aus** dem Dokument "Robot Assistants at Manual Workplaces: Effective Co-operation and Safety Aspects" (Martin Hägele ET AL, 2002) **ist als nächstliegender Stand der Technik ein Assistenzroboter bekannt.**

**Aus** dem Dokument "Montage am kontinuierlich bewegten Band" (F Lange ET AL, 2008) **ist eine Fertigungsanlage mit Band bekannt.**

**Aus** dem Dokument "Move Over, Rover - Here Comes Justin the Robot" (youtube, 6. Juni 2011: https://www.youtube.com/watch?v=kBAqsTpcHEE) **ist ein Roboter bekannt.**

**Aus der** DE 10 2014 217352 **ist eine verfahrbare Vorrichtung zur Manipulation von Gegenständen bekannt.**

**Aus** dem Dokument "PowerMate - A Safe and Intuitive Robot Assistant for Handling and Assembly Tasks" (SCHRAFT R D ET AL, 2005) **ist ein intuitives Robotersystem bekannt.**

**Aus der** US 6 430 473 B1 **ist ein Assistenzroboter bekannt.**

Der Erfindung liegt daher die Aufgabe zugrunde, ein Verfahren zum Betreiben einer ergonomischen Fertigungsanlage weiterzubilden.

Erfindungsgemäß wird die Aufgabe durch ein Verfahren nach den in Anspruch **1** angegebenen Merkmalen gelöst.

**Von Vorteil ist dabei, dass in der ersten Betriebsart ein automatisches Erkennen und Aufnehmen einer Komponente ausführbar ist und dann ein automatisches Herantransportieren ausführbar ist. danach ist vom Bediener ein Mensch-geführtes Verfahren des Fahrzeugs mit steif gestelltem Roboterarm ausführbar, also die zweite Betriebsart, oder alternativ vom Bediener ein Mensch-geführtes Bewegen des Roboterarms mit fixiertem Fahrzeug, also die dritte Betriebsart.**

**Bei einer vorteilhaften Ausgestaltung werden in der zweiten und in der dritten Betriebsart die Antriebe des Roboterarms und/oder der Antrieb des Fahrzeugs in Lageregelung betrieben,**
**insbesondere also jedem der Antriebe jeweils eine Sollposition vorgegeben wird und die jeweilige Istposition des jeweiligen Antriebs erfasst wird und auf die Sollposition hin geregelt wird, insbesondere indem der Antrieb ein von dem zeitlichen Verlauf der Differenz zwischen Istposition und Sollposition abhängiges Drehmoment erzeugt. Von Vorteil ist dabei, dass im autonomen Betrieb keine Lageregelung, sondern beispielsweise eine Drehmomentenregelung oder eine Drehzahlregelung ausführbar ist. Erst bei Mensch-geführten Betriebsarten wird die Lageregelung ausgeführt, wobei die Sollposition vom Menschen mittels des Sensorrings veränderbar ist, insbesondere verschiebbar.**

Wichtige Merkmale der Erfindung bei **einer zur Durchführung des Verfahrens verwendbaren** Fertigungsanlage zur Herstellung eines Produktes, insbesondere Getriebemotors, aus einer ersten Komponente, insbesondere Elektromotor, und aus einer zweiten Komponente, insbesondere Getriebe, sind, dass die Fertigungsanlage einen Roboterarm aufweist, welcher auf einem insbesondere auf einem Boden der Fertigungsanlage, verfahrbaren Fahrzeug angeordnet ist,
wobei ein Sensorring mit dem Roboterarm verbunden ist zur kraftarmen Führung einer vom Roboterarm aufgenommenen ersten Komponente.

Von Vorteil ist dabei, dass eine ergonomische Fertigung ausführbar ist. Denn der Bediener muss nur geringen Kraftaufwand aufbringen, auch wenn Komponenten mit großer Masse zu bewegen sind. Das Fahrzeug fungiert dabei als Assistent und bewegt die schwere Masse gemäß der Vorgabe des Bedieners. Mit anderen Worten ausgedrückt, ist die erfindungsgemäße Fertigungsanlage mit fahrbarem Roboterarm als Assistent bei der Montage vorgesehen, wobei eine erste Komponente vom Roboterarm aufgenommen und zu einem Bediener gefahren wird, der dann durch Führen eines am Roboterarm befestigten Sensorrings die erste Komponente zu einer stationär gelagerten zweiten Komponente heranführt und die beiden Kompoenten verbindet.

Bei einer vorteilhaften Ausgestaltung ist eine Bilderkennungseinheit auf dem Fahrzeug angeordnet, welche mit der den Roboterarm steuernden Steuerung verbunden ist, insbesondere wobei mittels der Bilderkennungseinheit eine erste Komponente erkennbar ist und somit der Roboterarm zum Aufnehmen der ersten Komponente entsprechend steuerbar ist. Von Vorteil ist dabei, dass mittels der Bilderkennungseinheit eine erste Komponente erkennbar ist. Beispielsweise werden die Komponenten in einem Behältnis angeliefert und mittels der Bilderkennungseinheit erkannt, so dass die erste Komponente mittels des Greifwerkzeugs des Roboterarms aufnehmbar ist.

Bei einer vorteilhaften Ausgestaltung weist der Roboterarm mehrere Antriebe auf, welche mit der Steuerung verbunden sind, welche eingerichtet ist, die Bewegung des Roboterarm zu steuern. Von Vorteil ist dabei, dass der Roboterarm als Assistenz fungiert.

Bei einer vorteilhaften Ausgestaltung ist ein Eingabemittel zum wahlweisen Betrieb des Antriebs des Fahrzeugs oder der Antriebe des Roboterarms vorgesehen,
wobei bei Auswahl des Betriebs des Antriebs des Fahrzeugs der Antrieb das Fahrzeug auf eine Sollposition hinsteuert, welche abhängig vom Signal des Sensorrings verschoben wird, und die Antriebe des Roboterarms ihre jeweilige Position, insbesondere Winkelposition, beibehalten,
wobei bei Auswahl des Betriebs der Antriebe des Roboterarms diese Antriebe auf eine jeweilige Sollposition, insbesondere jeweilige Winkelposition, hinsteuert, welche abhängig vom Signal des Sensorrings verschoben werden, und der Antrieb des Fahrzeugs seine Position beibehält und/oder eine Bremse des Fahrzeugs aktiviert ist. Von Vorteil ist dabei, dass entweder das Fahrzeug bei steif gestelltem Roboterarm verschiebbar ist oder dass der Roboterarm bewegbar ist bei fest positioniertem Fahrzeug.

Bei einer vorteilhaften Ausgestaltung ist die aufgenommene erste Komponente mittels des Roboterarms zu einer stationär gelagerten, zweiten Komponente hin führbar und an dieser zentrierbar ohne wesentlichen Kraftaufwand,
insbesondere zum Verbinden, insbesondere Schraubverbinden, der ersten mit der zweiten Komponente. Von Vorteil ist dabei, dass ein ergonomisches Arbeiten, insbesondere ohne großen Kraftaufwand, ermöglicht ist.

Bei einer vorteilhaften Ausgestaltung weist das Fahrzeug eine Sekundärwicklung auf, welche zur Übertragung elektrischer Energie mit einem am Boden angeordneten Primärleiter induktiv koppelbar ist, insbesondere zur resonanten Übertragung elektrischer Energie. Von Vorteil ist dabei, dass eine berührungslose Energieversorgung ermöglicht ist.

Bei einer vorteilhaften Ausgestaltung ist der Sekundärwicklung eine derartige Kapazität in Reihe oder parallel zugeschaltet, dass die Resonanzfrequenz des so gebildeten Schwingkreises der Frequenz des in den Primärleiter eingeprägten Wechselstroms entspricht. Von Vorteil ist dabei, dass ein hoher Wirkungsgrad trotz schwacher Kopplungsstärke erreichbar ist.

Bei einer vorteilhaften Ausgestaltung ist der Primärleiter als Primärwicklung ausgeführt, so dass das Fahrzeug nur in einem ersten Raumbereich aus dem Primärleiter induktiv versorgbar ist,
wobei das Fahrzeug einen Energiespeicher aufweist zur Versorgung des Fahrzeugs außerhalb des Raumbereichs. Von Vorteil ist dabei, dass der Boden der Anlage nur geringfügig bearbeitet werden muss.

Bei einer vorteilhaften Ausgestaltung weist der Roboterarm ein Greifwerkzeug auf, wobei das Greifwerkzeug von der Steuerung steuerbar ist. Von Vorteil ist dabei, dass die erste Komponente vom Greifwerkzeug aufnehmbar ist und somit vom Roboterarm transportierbar ist.

Bei einer vorteilhaften Ausgestaltung ist der Energiespeicher ein Doppelschichtkondensator, insbesondere Ultracap. Von Vorteil ist dabei, dass ein schnelles Aufladen ausführbar ist, also hohe Ladeströme erlaubt sind.

Weitere Vorteile ergeben sich aus den Unteransprüchen.

Die Erfindung wird nun anhand von Abbildungen näher erläutert:

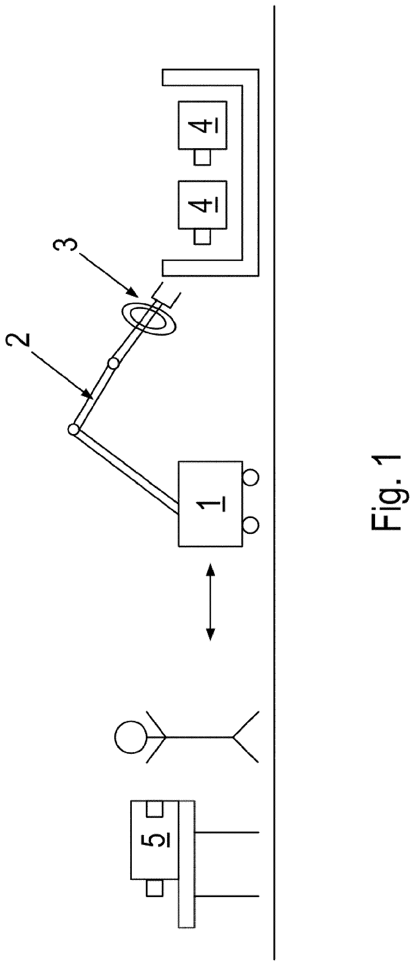

In der Figur 1 ist eine Fertigungsanlage zur Herstellung eines Produktes, insbesondere Getriebemotors, aus einer ersten Komponente, insbesondere Elektromotor 4, und aus einer zweiten Komponente, insbesondere Getriebe 5, schematisch skizziert.

Hierbei sind die ersten Komponenten 4 in einem Behältnis vorrätig gehalten, aus dem sie mittels eines Roboterarms 2, an welchem ein Greifwerkzeug angeordnet ist, entnehmbar sind.

Das Aufnehmen der ersten Komponente 4 wird dabei von einer Steuerung gesteuert, der auch die Signale einer Bilderkennungseinheit zugeführt werden. Somit greift das Werkzeug eine der ersten Komponenten 4 aus dem Behältnis heraus.

Da der Roboterarm 2 auf einem bodengängig verfahrbaren Fahrzeug 1 angeordnet ist, ist der Roboterarm 2 samt aufgenommener erster Komponente 4 verfahrbar angeordnet und zu einem Arbeitsbereich eines Bedieners hin verfahrbar. Hierzu weist das Fahrzeug 1 einen Antrieb auf.

Auf einem Werktisch ist eine zweite Komponente 5, beispielsweise ein Getriebe, angeordnet. Diese zweite Komponente 5 muss mit der ersten Komponente 4 verbunden werden. Im Beispiel werden die erste und zweite Komponente (4, 5) aneinander zentriert und dann schraubverbunden.

Wie oben beschrieben, ist das Fahrzeug zunächst samt Roboterarm 2 in autonomem Betrieb. Mittels der Bilderkennungseinheit wird die erste Komponente 4 in dem Vorrat, also Behältnis, erkannt und vom Roboterarme 2 aufgenommen. Das Fahrzeug 1 fährt danach eine Wegstrecke, um näher an den Bediener oder die vorgesehene Startposition zu gelangen.

Der Bediener, also Arbeiter und/oder Werker, betätigt ein Eingabemittel, wobei er zumindest eines von zwei Mensch-geführten Betriebsarten auswählt. Dabei ist die von ihm zunächst ausgewählte Betriebsart ein Bewegen des Fahrzeugs 1, wobei der Roboterarm 2 unbeweglich gehalten wird. Hierzu zieht der Bediener am Sensorring mit einer kleinen Kraft, so dass das Fahrzeug entsprechend diesem Ziehen sich bewegt. Dabei wird das Sensorsignal des Sensorrings 3 der Steuerung zugeführt, welche den Antrieben des Roboterarms 2 vorgibt, in ihrer jeweiligen Winkelposition zu verbleiben, also die jeweils bei Betätigen des Eingabemittels erfassten Istpositionen als Sollpositionen für die Antriebe des Roboterarms 2 vorgibt. Die Einwirkung des Bedieners auf den Sensorring 3 bewirkt also nur ein davon abhängiges Verfahren des Antriebs des Fahrzeugs. Beispielsweise kann der Bediener das Fahrzeug 1 in dieser Betriebsart zu sich näher heranziehen oder zu einer gewünschten Position verschieben, wobei nur ein sehr geringer Kraftaufwand notwendig ist, nämlich die Betätigung des Sensorrings 3.

Danach betätigt der Bediener wiederum das Eingabemittel, so dass die andere der beiden Mensch-geführten Betriebsarten ausgewählt wird. Hierbei wird die Bremse des Fahrzeugs 1 betätigt und/oder der beim Betätigen des Eingabemittels vorhandene Istwert der Position des Antriebs des Fahrzeugs 1 als Sollposition für den Antrieb des Fahrzeugs 1 vorgegeben. Somit bleibt das Fahrzeug 1 stehen. Der Bediener berührt den mit dem Roboterarm 2 verbundenen Sensorring 3 und führt dann mit äußerst wenig Aufwand an Kraft und/oder Drehmoment den Roboterarm 2 samt der aufgenommenen ersten Komponente 4 zur zweiten Komponente 5. Dabei ist vom Bediener eine relative Feinjustierung und Zentrierung der beiden Komponenten (4, 5) relativ zueinander mit diesem geringen Aufwand ausführbar.

Hierzu werden die vom Sensorring erfassten Sensorsignale der Steuerung zugeführt, welche den Roboterarm derart steuert, dass die aufgenommene zweite Komponente 5 entsprechend der Richtung der detektierten Kraft bewegt wird, wobei Masse beziehungsweise Trägheitsmoment für den Bediener effektiv vermindert erscheinen. Somit ist der Bediener in der Lage, eine erste Komponente 4, welche eine sehr große Masse aufweist, mit äußerst geringem Kraftaufwand an die zweite Komponente 5 heranzuführen und dann die Verbindung der beiden Komponenten (4, 5) zu einem Produkt, insbesondere Schraubverbindung, mit geringem Aufwand auszuführen. Hierzu werden die Antriebe des Roboterarms 2 auf Sollwerte hin geregelt, welche entsprechend der Sensorsignale des Sensorrings 3 verändert werden.

Somit ist mittels des Eingabemittels zwischen der autonomen und den beiden Mensch-geführten Betriebsarten umschaltbar.

Das Fahrzeug ist an seiner Unterseite mit einer Sekundärwicklung vorgesehen, welche induktiv koppelbar ist mit einem am Boden verlegten Primärleiter, der mit einem mittelfrequenten Wechselstrom beaufschlagbar ist. Die Mittelfrequenz liegt hierbei vorzugsweise zwischen 10 kHz und 1000 kHz. Der Sekundärwicklung ist eine derartige Kapazität in Reihe und/oder seriell zugeschaltet, dass die Resonanzfrequenz des so gebildeten Schwingkreises im Wesentlichen der Frequenz des in den Primärleiter eingeprägten Wechselstroms entspricht.

Somit ist eine induktive Versorgung des Fahrzeugs 1 ermöglicht.

Der Primärleiter ist entlang der Fahrstrecke des Fahrzeugs am Boden verlegt.

Bei einem weiteren erfindungsgemäßen Ausführungsbeispiel ist der Primärleiter als Wicklung ausgeführt, insbesondere als Ringwicklung.

Somit muss der Boden nicht langgestreckt entlang der Fahrbahn des Fahrzeugs aufgefräst werden zur Ermöglichung der Verlegung des Primärleiters, sondern nur im Bereich des kompakten Bereiches der Wicklung. In demjenigen Raumbereich um die Wicklung herum, in welchem eine ausreichende induktive Kopplung zwischen Primärwicklung und Sekundärwicklung des Fahrzeugs erreichbar ist, ist somit der Energiespeicher des Fahrzeugs beladbar und außerhalb des genannten Raumbereichs ist das Fahrzeug, insbesondere dessen Antrieb, die Steuerung und die Antriebe des Roboterarms, aus dem Energiespeicher versorgbar.

### Bezugszeichenliste

1 Fahrzeug mit Roboterarm
2 Roboterarm
3 Sensorring
4 Elektromotor
5 Getriebe

## Patentansprüche

1. Verfahren zum Betr**ei**ben einer Fertigungsanlage **zur Herstellung eines Produktes, insbesondere Getriebemotors, aus einer ersten Komponente, insbesondere Elektromotor (4), und aus einer zweiten, stationär gelagerten Komponente, insbesondere Getriebe,**
**wobei die Fertigungsanlage einen Roboterarm (2) aufweist, welcher auf einem insbesondere auf einem Boden der Fertigungsanlage, verfahrbaren Fahrzeug (1) angeordnet ist,**
**wobei ein Sensorring (3) mit dem Roboterarm (2) verbunden ist zur kraftarmen Führung einer vom Roboterarm (2) aufgenommenen ersten Komponente,**
**dadurch gekennzeichnet, dass**
**mittels eines Eingabemittels** eine **erste, zweite oder dritte Betriebsart derart ausgewählt wird,** so dass abhängig von der Betätigung des Eingabemittels
- **in einem ersten Verfahrensschritt** in **der** ersten Betriebsart das Fahrzeug (1) samt Roboterarm (2) autonom betrieben wird, insbesondere von der Steuerung gesteuert wird,
- **in einem zweiten auf den ersten Verfahrensschritt zeitlich nachfolgenden Verfahrensschritt** in **der** zweiten Betriebsart ein derartiges Mensch-geführtes Betreiben ausgeführt wird, dass abhängig von den Sensorsignalen des Sensorrings (3) die für den Antrieb des Fahrzeugs (1) vorgegebene Sollposition verändert wird, wobei als jeweilige Sollpositionen der jeweiligen Antriebe des Roboterarms (2) konstante Werte vorgegeben werden, **wobei** die bei Betätigen des Eingabemittels zum Auswählen der zweiten Betriebsart vorhandenen Istpositionen der jeweiligen Antriebe des Roboterarms (2) als Sollpositionen der jeweiligen Antriebe des Roboterarms (2) **vorgegeben wird,**
- **in einem dritten auf den zweiten Verfahrensschritt zeitlich nachfolgenden Verfahrensschritt** in **der** dritten Betriebsart ein derartiges Mensch-geführtes Betreiben ausgeführt wird, dass abhängig von den Sensorsignalen des Sensorrings (3) die jeweiligen Sollpositionen der jeweiligen Antriebe des Roboterarms (2) verändert werden, wobei eine Bremse des Fahrzeugs (1) betätigt wird /oder als Sollposition für den Antrieb des Fahrzeugs (1) ein konstanter Wert vorgegeben wird, **wobei** die bei Betätigen des Eingabemittels zum Auswählen der dritten Betriebsart vorhandene Istposition des Antriebs des Fahrzeugs (1) als Sollposition des Antriebs des Fahrzeugs (1) **vorgegeben wird,**
**wobei die aufgenommene erste Komponente mittels des Roboterarms (2) zu der stationär gelagerten, zweiten Komponente hingeführt wird und an dieser zentriert wird ohne wesentlichen Kraftaufwand, zum Verbinden, insbesondere Schraubverbinden, der ersten mit der zweiten Komponente.**

2. Verfahren nach **Anspruch 1,**
**dadurch gekennzeichnet, dass**
in der zweiten und in der dritten Betriebsart die Antriebe des Roboterarms (2) und/oder der Antrieb des Fahrzeugs (1) in Lageregelung betrieben werden,
insbesondere also jedem der Antriebe jeweils eine Sollposition vorgegeben wird und die jeweilige Istposition des jeweiligen Antriebs erfasst wird und auf die Sollposition hin geregelt wird, insbesondere indem der Antrieb ein von dem zeitlichen Verlauf der Differenz zwischen Istposition und Sollposition abhängiges Drehmoment erzeugt.

## Claims

1. Method for operating a manufacturing facility for producing a product, in particular a gear motor, out of a first component, in particular an electric motor (4), and a second, fixedly mounted component, in particular a gearing,
the manufacturing facility comprising a robot arm (2) arranged on a vehicle (1) that is movable in particular on a floor of the manufacturing facility,
a sensor ring (3) being connected to the robot arm (2) for guiding, in a manner requiring little force, a first component being held by the robot arm (2),
**characterised in that**
a first, second or third operating mode is selected using an input means such that, depending on the actuation of the input means,
- in a first method step, in the first operating mode, the vehicle (1) is operated autonomously together with the robot arm (2), in particular is controlled by the controller,
- in a second method step following the first method step, in the second operating mode, a human-guided operation is carried out such that the target position specified for the drive of the vehicle (1) is altered depending on the sensor signals from the sensor ring (3), constant values being specified as the respective target positions of each drive of the robot arm (2), the actual positions of the respective drives of the robot arm (2) when the input means is actuated for selecting the second operating mode being specified as the target positions of the respective drives of the robot arm (2),
- in a third method step following the second method step, in the third operating mode, a human-guided operation is carried out such that the respective target positions of each drive of the robot arm (2) are altered depending on the sensor signals from the sensor ring (3), a brake of the vehicle (1) being applied or a constant value being specified as the target position for the drive of the vehicle (1), the actual position of the drive of the vehicle (1) when the input means is actuated for selecting the third operating mode being specified as the target position of the drive of the vehicle (1),
the first component, which is being held, being guided towards the fixedly mounted second component by means of the robot arm (2) and being centred thereon without any substantial force being exerted, in order to connect, in particular screw-connect, the first component to the second component.

2. Method according to claim 1,
**characterised in that**
the drives of the robot arm (2) and/or the drive of the vehicle (1) are operated in closed-loop position control in the second and the third operating mode,
in particular therefore a respective target position is specified to each of the drives and the respective actual position of each drive is detected and controlled towards the target position, in particular by the drive generating a torque that is dependent on the progression over time of the difference between the actual position and the target position.

## Revendications

1. Procédé d'exploitation d'une installation de production dévolue à la fabrication d'un produit, notamment d'un motoréducteur composé d'un premier élément structurel, en particulier un moteur électrique (4), et d'un second élément structurel à montage fixe, une transmission en particulier,
l'installation de production étant munie d'un bras de robot (2) implanté sur un véhicule (1) notamment apte à se déplacer sur un sol de ladite installation de production,
une bague détectrice (3) étant reliée au bras de robot (2) en vue du pilotage, avec faible application de force, d'un premier élément structurel prélevé par ledit bras de robot (2), **caractérisé par le fait**
**qu'**un premier, deuxième ou troisième mode de fonctionnement est sélectionné à l'aide d'un moyen d'entrée, de façon telle qu'en fonction de l'actionnement dudit moyen d'entrée,
- au cours d'une première étape opératoire, dans le premier mode de fonctionnement, le véhicule (1) soit actionné de manière autonome conjointement au bras de robot (2), notamment régi par la commande,
- au cours d'une deuxième étape opératoire succédant, dans le temps, à ladite première étape opératoire dans le deuxième mode de fonctionnement, il soit procédé à l'exécution d'un actionnement à pilotage humain tel que l'emplacement de consigne, préétabli pour l'entraînement du véhicule (1), soit modifié en fonction des signaux de détection de la bague détectrice (3), sachant que des valeurs constantes sont préétablies en tant qu'emplacements de consigne respectifs des entraînements considérés du bras de robot (2), les emplacements effectifs desdits entraînements considérés du bras de robot (2), présents lors d'un actionnement du moyen d'entrée visant à sélectionner le deuxième mode de fonctionnement, étant alors préétablis en tant qu'emplacements de consigne desdits entraînements considérés dudit bras de robot (2),
- au cours d'une troisième étape opératoire succédant, dans le temps, à ladite deuxième étape opératoire dans le troisième mode de fonctionnement, il soit procédé à l'exécution d'un actionnement à pilotage humain tel que les emplacements de consigne respectifs des entraînements considérés du bras de robot (2) soient modifiés en fonction des signaux de détection de la bague détectrice (3), auquel cas un frein du véhicule (1) est actionné, ou bien une valeur constante est préétablie en tant qu'emplacement de consigne affecté à l'entraînement dudit véhicule (1), l'emplacement effectif dudit entraînement du véhicule (1), présent lors d'un actionnement du moyen d'entrée visant à sélectionner le troisième mode de fonctionnement, étant alors préétabli en tant qu'emplacement de consigne dudit entraînement dudit véhicule (1),
sachant que le premier élément structurel prélevé est guidé, au moyen dudit bras de robot (2), vers le second élément structurel à montage fixe sur lequel il est centré, sans application de force notable, en vue de la liaison, notamment de la liaison par vissage dudit premier élément structurel avec le second.

2. Procédé selon la revendication 1,
**caractérisé par le fait que**,
dans les deuxième et troisième modes de fonctionnement, les entraînements du bras de robot (2) et/ou l'entraînement du véhicule (1) est (sont) actionné(s) avec régulation de positions,
c'est-à-dire, en particulier, qu'un emplacement de consigne est respectivement préétabli pour chacun des entraînements, et que l'emplacement effectif de l'entraînement considéré est respectivement détecté, puis régulé en ciblant ledit emplacement de consigne, notamment du fait que ledit entraînement développe un couple de rotation tributaire de l'allure temporelle de la différence entre l'emplacement effectif et l'emplacement de consigne.
